# EUROPÄISCHE PATENTANMELDUNG

(11) **EP 3 438 698 A1**
(43) Veröffentlichungstag der Anmeldung: **06.02.2019**
(21) Anmeldenummer: 18186831.6
(22) Anmeldetag: 01.08.2018
(51) Int. Cl.: G01S 17/74, G01S 7/48

(54) **VERFAHREN ZUM BETRIEB EINES KRAFTFAHRZEUGS MIT EINEM LIDAR-SENSOR**

(30) Priorität: 01.08.2017 DE 102017213215
(71) Anmelder: Ford Global Technologies, LLC, Dearborn, MI 48126 (US)
(72) Erfinder: Stefan, Frederic, 52072 Aachen (DE); Chevalier, Alain, 4841 Henri-Chapelle (BE); Marbaix, Michael, 5351 Haillot (BE); Bitsanis, Evangelos, 52062 Aachen (DE)
(74) Vertreter: Dörfler, Thomas

(57) **Zusammenfassung**

Die Erfindung betrifft ein Verfahren zum Betrieb eines Kraftfahrzeugs (2) mit einem Lidar-Sensor (4), mit den Schritten:
Beaufschlagen eines Nano-Fingerprints (8) mit Laserlicht, wobei das Laserlicht von dem Lidar-Sensor (4) emittiert wird, und wobei der Nano-Fingerprint (8) einem Objekt (6) zugeordnet ist,
Einlesen von Sensordaten (SD) des Lidar-Sensors (4), und
Auswerten der Sensordaten (SD), um in den Sensordaten (SD) enthaltende Objektdaten (OD) zu extrahieren und dem Objekt (6) zu zuordnen.

## Beschreibung

Die Erfindung betrifft ein Verfahren zum Betrieb eines Kraftfahrzeugs mit einem Lidar-Sensor. Ferner betrifft die Erfindung ein Computerprogrammprodukt zum Durchführen des Verfahrens sowie eine derartige Vorrichtung und einen Lidar-Sensor sowie ein Kraftfahrzeug mit einer derartigen Vorrichtung.

Als selbstfahrendes Kraftfahrzeug (auch autonomes Landfahrzeug) wird ein PKW oder anderes Kraftfahrzeug bezeichnet, das ohne Einfluss eines menschlichen Fahrers fahren, steuern und einparken kann (Hochautomatisiertes Fahren bzw. Autonomes Fahren). Im Falle, dass keinerlei manuelles Steuern seitens des Fahrers nötig ist, wird auch der Begriff Roboterauto verwendet. Dann kann der Fahrersitz leer bleiben; eventuell sind Lenkrad, Brems- und Gaspedal nicht vorhanden.

Unter den Begriff "selbstfahrendes Kraftfahrzeug" fallen des Weiteren auch Lastkraftwagen, landwirtschaftliche Zugmaschinen und Militärfahrzeuge ohne Einfluss des Fahrers oder ganz ohne Fahrer.

Selbstfahrende Kraftfahrzeuge können mit Hilfe verschiedener Sensoren ihre Umgebung erfassen und aus den gewonnenen Informationen ihre Position und die anderer Verkehrsteilnehmer bestimmen, in Zusammenarbeit mit der Navigationssoftware das Fahrziel ansteuern und Kollisionen auf dem Weg vermeiden.

Eine Art von Sensoren, die hier Verwendung finden, sind sogenannte Lidar-Sensoren. Selbstfahrende Kraftfahrzeuge mit Lidar-Sensoren sind z.B. aus der US 9,234,618 B1 bekannt.

LIDAR (Abkürzung für engl. light detection and ranging), auch Ladar (laser detection and ranging) ist eine dem Radar sehr verwandte Methode zur optischen Abstands- und Geschwindigkeitsmessung. Statt Radiowellen verwenden Lidar-Sensoren Laserlicht. Lidar-Sensoren senden Laserimpulse aus und detektieren das zurückgestreute Licht. Aus der Lichtlaufzeit der Signale wird die Entfernung zum Objekt berechnet.

Hierzu weisen Lidar-Sensoren z.B. eine Reihe von Laserscannern auf, die auf einem rotierenden Träger montiert sind. Lidar-Sensoren können 360-Grad-Scans ihrer Umgebung durchführen und jedes Objekt oder Hindernis mit sehr hoher Geschwindigkeit erfassen. Im Allgemeinen liefern Lidar-Sensoren einen 3D-Streuungsdatensatz, der sich aus den Echos aller von den Lasern um das Kraftfahrzeug getroffenen Objekte zusammensetzt.

Die Daten selbst können vielseitig verwendet werden, z.B. für eine Trajektorienplanung, Erfassung anderer Verkehrsteilnehmer und/oder zur Hindernisvermeidung usw. Die Auswertung der Daten nimmt allerdings sehr viel Rechnerressourcen in Anspruch, denn es ist der Einsatz von sehr komplexen und teuren Algorithmen in Bezug auf die Verarbeitungsleistung und die Bearbeitungszeit erforderlich, um in der Lage zu sein, alle vom Laserlicht getroffenen Objekte zu identifizieren und die Eigenschaften der erfassten Objekte zu bestimmen sowie festzulegen, auf welche Art und Weise diese Objekte zu berücksichtigen sind.

Es ist daher Aufgabe der Erfindung, einen Weg aufzuzeigen, den Bedarf an Rechnerressourcen zu reduzieren.

Erfindungsgemäß werden bei einem Verfahren zum Betrieb eines Kraftfahrzeugs mit einem Lidar-Sensor die Schritte ausgeführt:
Beaufschlagen eines Nano-Fingerprints mit Laserlicht, wobei das Laserlicht von dem Lidar-Sensor emittiert wird, und wobei der Nano-Fingerprint einem Objekt zugeordnet ist,
Einlesen von Sensordaten des Lidar-Sensors, und
Auswerten der Sensordaten, um in den Sensordaten enthaltende Objektdaten zu extrahieren und dem Objekt zu zuordnen.

Dabei beruht die Erfindung auf der überraschenden Erkenntnis, dass durch sogenannte Nano-Fingerprints objektbezogene Daten bereitgestellt werden können, deren Erfassung und Auswertung den Bedarf an Rechnerressourcen reduziert.

Der Nano-Fingerprint enthält also Objektdaten, die es ermöglichen, die Art eines vom Lidar-Sensor erfassten Objekts zu identifizieren. Der Nano-Fingerprints kann eine passive und unsichtbare Struktur sein, die mit einem Laserscanner wie eine Nano-Codeleiste, ein Nano-QR-Code oder ähnlichem ausgelesen werden kann.

Ein derartiger, passiver Nano-Fingerprint kann bei der Herstellung oder durch Aufbringen einer speziellen Schicht auf ein Objekt, wie z.B. einer Sonderlackierung, oder durch die Implementierung von speziellen chemischen Elementen im Objekt, wie z.B. durch Laserablation, oder durch spezielle Muster auf der Objektoberfläche, die z.B. durch Laserinterferometrie detektiert werden, gebildet sein.

Alternativ kann ein derartiger aktiver Nano-Fingerprint ein aktiver Code sein, der in einem Speicher gespeichert und vom Objekt ausgesendet wird, wenn das Objekt von einem Laserstrahl getroffen wird.

Derartige, passive oder aktive Nano-Fingerprints können in einer breiten Palette von Objekten implementiert werden, die Relevanz im Verkehr erlangen können, wie z.B. Straßen, Straßeninfrastrukturen, Kleidung, Bälle, Fahrzeugen, Zäune, Fahrräder, Smartphones usw.

Gemäß einer Ausführungsform werden die Objektdaten einem Meta-Objekt zugeordnet.

Dabei ist ein Objekt eine physikalische Einheit, die von einem Lidar-Sensor erfasst werden kann. Objekte können Teil eines Meta-Objekts sein. Ein Meta-Objekt wiederum ist jede physikalische Einheit, die eine Objektzusammensetzung aus mehreren Objekten ist.

Es kann wiederum verschiedene Meta-Objekte geben:
Ein Meta-Verkehrsobjekt beschreibt eine selbstabhängige Einheit aus mindestens einem Objekt. Ein Meta-Verkehrsobjekt kann ein Fahrzeug, wie z.B. PKW, Bus, LKW, Straßenbahn, oder ein Zug, eine Straßeninfrastruktur, wie z.B. Verkehrszeichen, Ampeln, Lampen, Zaun, Straße, Straßensperre, ein Verkehrsteilnehmer wie z.B. ein Fußgänger, ein Fahrradfahrer, oder ein Ball.

Jedes Meta-Verkehrsobjekt weist ihm zugeordnete Eigenschaften auf und jedem Meta-Verkehrsobjekt kann eine eindeutige Kennung zugeordnet sein.

Den Objekten können weitere Informationen/Eigenschaften zugeordnet werden, wie z.B. die Natur des Objekts (z.B. Tür, Licht, Seitenspiegel, Windschutzscheibe, Rad, Kugel, Straße, Stoffstück, Fahrrad usw.), eine Materialzusammensetzung des Gegenstandes (z.B. Metall, Holz, Asphalt, Verbundwerkstoff usw.) und/oder die Zuordnung des Objektes zu einem Meta-Verkehrsobjekt (z.B. Tür eines PKWs).

Die vom Scannen eines Objekts abgerufenen Informationen/Eigenschaften können auch betreffen: eine Kapuze, einen Seitenspiegel, ein Rad, ein rechte Tür zum Meta-Objekt des Typs Fahrzeug, ein Hemd oder eine Hose aus Meta-Objekt Typ Fußgänger.

Gemäß einer weiteren Ausführungsform werden aus den Sensordaten Positionsdaten des Objektes ermittelt und den Sensordaten zugeordnet. So können durch Sensordatenfusion Informationen gewonnen werden, die die Umgebung des Kraftfahrzeugs zuverlässig abbilden.

Ferner gehören zur Erfindung ein Computerprogrammprodukt zum Durchführen des Verfahrens sowie eine derartige Vorrichtung und einen Lidar-Sensor sowie ein Kraftfahrzeug mit einer derartigen Vorrichtung.

Weitere Merkmale, Eigenschaften und Vorteile der Erfindung ergeben sich aus der nachfolgenden Beschreibung von Ausführungsbeispielen unter Bezugnahme auf die beiliegenden Figuren.
- Figur 1: zeigt in schematischer Darstellung ein Ausführungsbeispiel eines Kraftfahrzeugs.
- Figur 2: zeigt Komponenten des in Figur 1 dargestellten Kraftfahrzeugs.

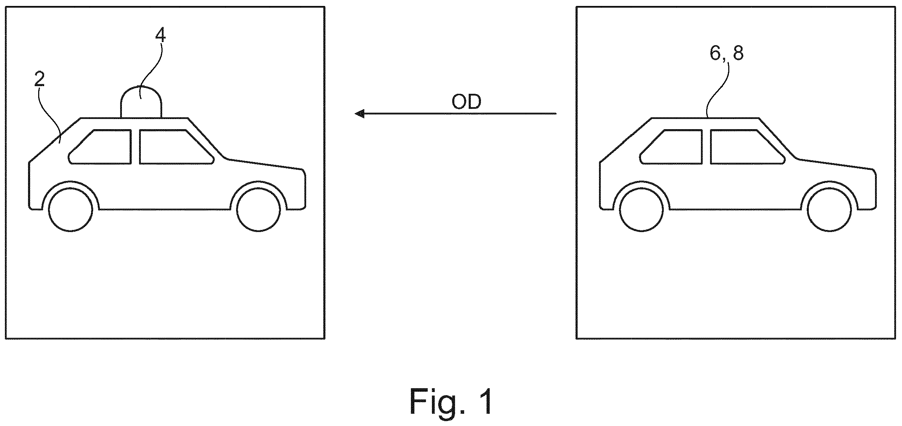

Es wird zunächst auf Figur 1 Bezug genommen.

Dargestellt ist ein Kraftfahrzeug 2, das im vorliegenden Ausführungsbeispiel als PKW ausgebildet ist.

Das Kraftfahrzeug 2 ist ferner im vorliegenden Ausführungsbeispiel als selbstfahrendes Kraftfahrzeug ausgebildet, das ohne Einfluss eines menschlichen Fahrers fahren, steuern und einparken kann. Mit anderen Worten, das Kraftfahrzeug 2 ist ein Level 5 Kraftfahrzeug gemäß der SAE J3016 Klassifizierung und weist die hierfür erforderlichen Komponenten auf. Abweichend vom vorliegenden Ausführungsbeispiel kann das Kraftfahrzeug 2 gemäß einem der Level 1 bis 4 gemäß der Klassifizierung SAE J3016 ausgebildet sein.

Zur Erfassung seiner Umgebung und insbesondere von sich in der Umgebung befindlicher Objekte 6, im vorliegenden Ausführungsbeispiel ein Verkehrsteilnehmer in Form eines PKWs, weist das Kraftfahrzeug 2 einen Lidar-Sensor 4 auf.

Der Lidar-Sensor 4 im vorliegenden Ausführungsbeispiel weist eine Mehrzahl von Laserscannern auf, die auf einem rotierenden Träger montiert sind und so 360-Grad-Scans der Umgebung des Kraftfahrzeugs 2 erlauben.

Als Ausgangsdaten liefert der Lidar-Sensor 4 im vorliegenden Ausführungsbeispiel einen 3D-Streuungsdatensatz, der sich aus den Echos aller getroffenen Objekte 6 zusammensetzt, die von Laserstrahlen in der Umgebung des Kraftfahrzeugs 2 getroffen wurden. Im vorliegenden Ausführungsbeispiel sind das die Echos des Objektes 6. Die Daten des 3D-Streuungsdatensatzes werden zur Trajektorienplanung, Erfassung anderer Verkehrsteilnehmer und/oder zur Hindernisvermeidung usw. verwendet.

Dem Objekt 6 ist im vorliegenden Ausführungsbeispiel ein Nano-Fingerprint 8 zugeordnet.

Der Nano-Fingerprint 8 stellt Objektdaten OD bereit, die es ermöglichen, Eigenschaften des vom Lidar-Sensor 4 erfassten Objekts 6 zu bestimmen, wie dies später noch detailliert erläutert wird. Der Nano-Fingerprint 8 kann eine unsichtbare oder auch sichtbare Struktur sein, die mit einem Laserscanner wie einem Lidar-Sensor 4 ausgelesen werden kann. Der Nano-Fingerprint 8 kann einstückig und/oder materialeinheitlich ausgebildet sein. Ferner kann der Nano-Fingerprint 8 eine separate Komponente sein, die mit dem Objekt 6 verbunden wurde, oder der Nano-Fingerprint 8 ist unlösbar bzw. unverlierbar mit dem Objekt 6 verbunden.

Ein derartiger Nano-Fingerprint 8 kann als passive oder aktive Komponente ausgebildet sein.

Passive Nano-Fingerprints 8 können bei der Herstellung oder durch Aufbringen einer speziellen Schicht auf das Objekt 6, wie z.B. durch eine Sonderlackierung, oder durch die Implementierung von speziellen chemischen Elementen im Objekt 6, wie z.B. durch Laserablation, oder durch spezielle Muster auf einer Oberfläche des Objektes 6, die z.B. durch Laserinterferometrie detektiert werden, gebildet werden.

Aktive Nano-Fingerprints 8 hingegen sind dazu ausgebildet, einen in einem Speicher abgespeicherten Code auszusenden, wenn das Objekt 6 von einem Laserstrahl getroffen wird.

Abweichend vom vorliegenden Ausführungsbeispiel können Nano-Fingerprints 8 auch anderen Objekten 6 zugeordnet werden, wie z.B. Straßen, Straßeninfrastrukturen, Kleidung, Bälle, Fahrzeugen, Zäune, Fahrräder, Smartphones usw.

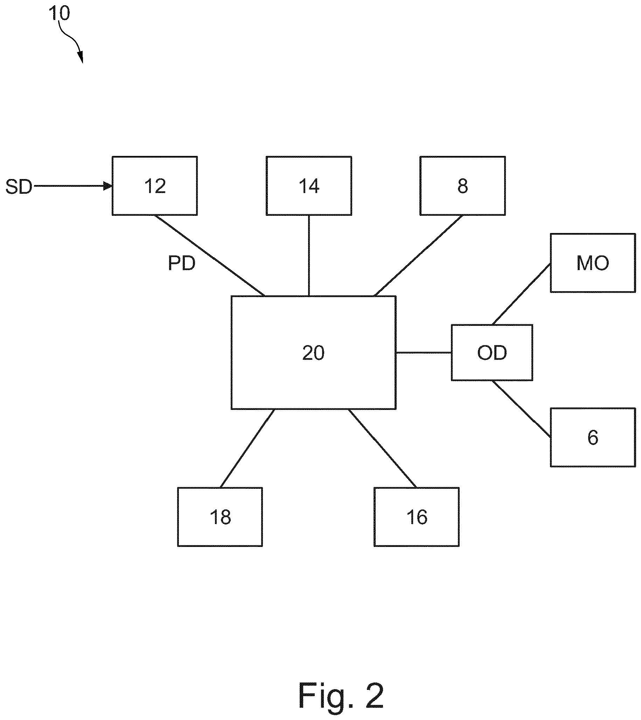

Dabei wird unter Objekten 6 jeweils eine physikalische Einheit verstanden, die von dem Lidar-Sensor 4 erfasst werden kann. Objekte 6 können Meta-Objekte MO (siehe Figur 2) zugeordnet sein. Ein Meta-Objekt MO wiederum ist jede physikalische Einheit, die eine Objektzusammensetzung aus einer Mehrzahl aus Objekten 6 sein kann.

Es kann wiederum verschiedene Arten von Meta-Objekten MO geben. Ein Meta-Verkehrsobjekt beschreibt eine selbstabhängige Einheit aus mindestens einem Objekt 6. Ein Meta-Verkehrsobjekt kann ein Kraftfahrzeug, wie z.B. PKW, Bus, LKW, Straßenbahn, oder Zug, eine Straßeninfrastruktur, wie z.B. Verkehrszeichen, Ampeln, Lampen, Zaun, Straße, Straßensperre, ein Verkehrsteilnehmer, wie z.B. ein Fußgänger, ein Fahrradfahrer, oder ein Ball.

Jedes Meta-Verkehrsobjekt weist ihm zugeordnete Eigenschaften auf und jedem Meta-Verkehrsobjekt kann eine eindeutige Kennung zugeordnet sein.

Den Objekten 6 können weitere Informationen/Eigenschaften zugeordnet werden, wie z.B. die Eigenschaften des Objekts 6 (z.B. Tür, Licht, Seitenspiegel, Windschutzscheibe, Rad, Kugel, Straße, Stoffstück, Fahrrad usw.), eine Materialzusammensetzung des Gegenstandes (z.B. Metall, Holz, Asphalt, Verbundwerkstoff usw.) und/oder die Zuordnung des Objektes 6 zu einem Meta-Verkehrsobjekt, wie (z.B. zu einer Tür eines PKWs).

Die vom Scannen eines Objekts 6 abgerufenen Objekt-Daten OD enthaltenden Informationen/Eigenschaften können auch betreffen: eine Kapuze, einen Seitenspiegel, ein Rad, ein rechte Tür zum Meta-Objekt des Typs Fahrzeug, ein Hemd oder eine Hose aus Meta-Objekt Typ Fußgänger.

Es werden nun unter zusätzliche Bezugnahme auf die Figur 2 Komponenten einer Vorrichtung 10 erläutert, die dazu ausgebildet sind, Sensordaten SD - im vorliegenden Ausführungsbeispiel ein 3D-Streuungsdatensatz des Lidar-Sensors 4 - einzulesen und die Sensordaten SD auszuwerten, um Objektdaten OD dem Objekt 6 zuzuordnen, dem der Fingerprint 8 zugeordnet ist.

Hierzu weist die Vorrichtung 10 im vorliegenden Ausführungsbeispiel eine Detektionseinrichtung 12, eine Abtasteinrichtung 14, eine Identifikationseinrichtung 16, eine Steuereinrichtung 18 und eine Steuereinheit 20.

Die Vorrichtung 10, die Detektionseinrichtung 12, die Abtasteinrichtung 14, die Identifikationseinrichtung 16, die Steuereinrichtung 18 und/oder die Steuereinheit 20 können für die nachfolgend beschriebenen Aufgaben und Funktionen Hard- und/oder Softwarekomponenten aufweisen.

Die Detektionseinrichtung 12 greift im Betrieb auf den Lidar-Sensor 4 und die Sensordaten SD zu, extrahiert das Objekt 6, und bestimmt die Koordinaten des Objektes 6, die in Form von Positionsdaten PD bereitgestellt werden.

Die Abtasteinrichtung 14 ist zur Identifizierung des Objektes 6 ausgebildet.

Hierzu kann der Lidar-Sensor 4 eine zweite LIDAR-Einheit aufweisen, die in einem speziellen Identifikationsmodus arbeitet. Beispielsweise können mehrere Laserstrahlen gruppiert werden, um einen Scan des Objekts 6 durchzuführen, dass vom Lidar-Sensor 4 für die Objekterfassung getroffen wird.

Alternativ kann der Lidar-Sensor 4 modifiziert sein, derart, dass zusätzliche sekundäre Laserstrahlen, wie z.B. eine Anordnung mit vier Laserlichtquellen, um einen primären Laserstrahl herum implementiert sind. Die sekundären Laserstrahlen werden betrieben, um eine Identifikationsabtastung des Nano-Footprints 8 durchzuführen, während die primären Laserstrahlen für die Objekterfassung des Objektes 6 dienen.

Hierzu kann der Betrieb zur Objekterkennung modifiziert werden. Es kann ein Betrieb mit zwei Betriebsarten erfolgen: einen herkömmlichen Objekterfassungsmodus und einen Objektidentifikationsmodus.

Während des herkömmlichen Objekterfassungsmodus werden Objekte 6 detektiert und dann in einem nachfolgenden Objektidentifikationsmodus ein Scan dieser Objekte 6 zum Zwecke der Identifikation durchgeführt.

Dabei können während des Objektidentifikationsmodus die Laserstrahlen in Sub-Arrays gruppiert werden, um das Scannen von Objekten 6 zu ermöglichen.

Ferner kann der Lidar-Sensor 4 dazu ausgebildet sein eine Laserinterferometrie oder Laserablationstechnik anzuwenden, um ein bestimmtes Mikromuster einer Oberfläche des Objektes 6 zu scannen oder um die spezifische chemische Zusammensetzung des Objekts 6 zu bestimmen.

Eine Wechsel- bzw. Umschaltfrequenz zwischen den beiden Modi kann in Bezug auf das tatsächliche Verkehrsszenario (Verkehrsdichte, Umgebung, usw.), Fahrzeugstatus (Geschwindigkeit, Beschleunigung, usw.), oder ein Fahrmanöver (Überholen, Einparken, usw.) bestimmt werden.

Des Weiteren kann die Detektionseinrichtung 12 dazu ausgebildet sein, zusammen mit dem Nano-Footprint 8 eine Handshake-Prozedur durchzuführen.

Die Identifikationseinrichtung 16 ist dazu ausgebildet, Objekte 6 mit Meta-Objekten MO zu verknüpfen. Die Verknüpfungen können durch Auswertung von Zugehörigkeitsbeziehung der Objekte 6 bestimmt werden.

Ferner ist die Identifikationseinrichtung 16 dazu ausgebildet, Eigenschaften von Meta-Objekten MO zu bestimmen. Die Eigenschaften können durch Auswertung von Zugehörigkeitsbeziehung der Objekte 6 bestimmt werden.

Des Weiteren ist die Identifikationseinrichtung 16 dazu ausgebildet, Konturen von Meta-Objekten MO zu bestimmen. Alle Objekte 6, die zu demselben Metaobjekt MO gehören, werden durch einen Algorithmus gruppiert. Verschiedene Objekte 6 an gleichen Positionen werden gruppiert, um die Kontur des jeweiligen Meta-Objekts MO zu bestimmen, zu dem sie gehören.

Außerdem ist die Identifikationseinrichtung 16 dazu ausgebildet Koordinaten der jeweiligen Meta-Objekte MO zu bestimmen. Dies kann durch Bestimmen von z.B. einem Durchschnittswert aller Koordinaten aller Objekte 6 des Meta-Objekts MO erfolgen.

Schließlich ist die Identifikationseinrichtung 16 dazu ausgebildet für die Steuereinrichtung 18 Koordinaten von Meta-Objekten MO, Begrenzungen und Dimensionen von Meta-Objekten MO sowie Eigenschaften von Meta-Objekten MO bereitzustellen.

Die Steuereinrichtung 18 ist dazu ausgebildet, das Kraftfahrzeug 2 gemäß Level 5 der SAE J3016 Klassifizierung zu betreiben bzw. zu steuern.

Die Steuereinrichtung 18 ist dazu ausgebildet, eine Trajektorie für das Kraftfahrzeug 2 zu bestimmen und entsprechend den Sensordaten SD sowie den Ausgangsdaten der Detektionseinrichtung 12 entsprechend zu betreiben. Die Steuereinrichtung 16 kann z.B. Meta-Objekte des Typs Straße nutzen, um den Weg zu bestimmen, ihm zu folgen und kann z.B. Meta-Objekte des Typs Fahrzeug verwenden, um eine Trajektorie und eine Steuerstrategie zu bestimmen, um z.B. Überholmanöver oder Abbremsvorgänge durchzuführen.

Die Steuereinheit 20 ist die zentrale Steuerung für den Betrieb der Vorrichtung 10. Sie übernimmt Funktionen wie eine Aktivierung der Vorrichtung 10 und ihrer Komponenten, eine Aktivierung des LIDAR-Objekterkennungsmodus und des LIDAR-Objektidentifikationsmodus sowie deren Koordination, eine Aktivierung eines Objektidentifikations- und Erkennungsmodus sowie das Bereitstellen von Daten für die Steuereinrichtung 18.

Im Betrieb greift die Detektionseinrichtung 12 auf die Sensordaten SD zu, und extrahiert das Objekt 6 sowie bestimmt die Koordinaten des Objektes 6, die in Form von Positionsdaten PD bereitgestellt werden.

Die Abtasteinrichtung 14 identifiziert das Objekt 6 durch Erfassen der Objekt-Daten OD des Nano-Footprints 8.

Die Identifikationseinrichtung 16 ordnet dann erfasste Objekte 6 Meta-Objekten MO zu.

Ferner bestimmt die Identifikationseinrichtung 16 die jeweiligen Eigenschaften und Konturen von Meta-Objekten MO.

Des Weiteren stellt die Identifikationseinrichtung 16 für die Steuereinrichtung 18 Koordinaten von Meta-Objekten MO, Begrenzungen und Dimensionen von Meta-Objekten MO sowie Eigenschaften von Meta-Objekten MO bereit.

Die Steuereinrichtung 18 bestimmt unter Auswertung der Sensordaten SD sowie den Ausgangsdaten der Detektionseinrichtung 12 eine Trajektorie für das Kraftfahrzeug 2.

So können durch die Verwendung von Nano-Fingerprints 8 objektbezogene Daten wie Objekt-Daten OD bereitgestellt werden können, deren Erfassung und Auswertung den Bedarf an Rechnerressourcen eines insbesondere als selbstfahrendes Kraftfahrzeug ausgebildeten Kraftfahrzeugs 2 reduziert.

### Bezugszeichenliste

- 2: Kraftfahrzeug
- 4: Lidar-Sensor
- 6: Objekt
- 8: Nano-Fingerprint
- 10: Vorrichtung
- 12: Detektionseinrichtung
- 14: Abtasteinrichtung
- 16: Identifikationseinrichtung
- 18: Steuereinrichtung
- 20: Steuereinheit

- MO: Meta-Objekt
- OD: Objektdaten
- PD: Positionsdaten
- SD: Sensordaten

## Patentansprüche

1. Verfahren zum Betrieb eines Kraftfahrzeugs (2) mit einem Lidar-Sensor (4), mit den Schritten:
Beaufschlagen eines Nano-Fingerprints (8) mit Laserlicht, wobei das Laserlicht von dem Lidar-Sensor (4) emittiert wird, und wobei der Nano-Fingerprint (8) einem Objekt (6) zugeordnet ist,
Einlesen von Sensordaten (SD) des Lidar-Sensors (4), und
Auswerten der Sensordaten (SD), um in den Sensordaten (SD) enthaltende Objektdaten (OD) zu extrahieren und dem Objekt (6) zu zuordnen.

2. Verfahren nach Anspruch 1, wobei die Objektdaten (OD) einem Meta-Objekt (MO) zugeordnet werden.

3. Verfahren nach Anspruch 1 oder 2, wobei aus den Sensordaten (SD) Positionsdaten (PD) des Objektes (6) ermittelt und den Sensordaten (SD) zugeordnet werden.

4. Computerprogrammprodukt zum Durchführen eines Verfahrens nach einem der Ansprüche 1 bis 3.

5. Vorrichtung (10), dazu ausgebildet, einen Nano-Fingerprint (8) mit Laserlicht zu beaufschlagen, wobei das Laserlicht von dem Lidar-Sensor (4) emittiert wird, und wobei der Nano-Fingerprint (8) einem Objekt (6) zugeordnet ist, ferner dazu ausgebildet, Sensordaten (SD) des Lidar-Sensors (4) einzulesen und die Sensordaten (SD) auszuwerten, um in den Sensordaten (SD) enthaltende Objektdaten (OD) zu extrahieren und dem Objekt (6) zu zuordnen.

6. Vorrichtung (10) nach Anspruch 5, wobei die Vorrichtung (10) dazu ausgebildet ist die Objektdaten (OD) einem Meta-Objekt (MO) zu zuordnen.

7. Vorrichtung (10) nach Anspruch 5 oder 6, wobei die Vorrichtung (10) dazu ausgebildet ist aus den Sensordaten (SD) Positionsdaten (PD) des Objektes (6) zu ermitteln und den Sensordaten (SD) zu zuordnen.

8. Lidar-Sensor (4), dazu ausgebildet, einen Nano-Fingerprint (8) mit Laserlicht zu beaufschlagen, wobei der Nano-Fingerprint (8) einem Objekt (6) zugeordnet ist, und wobei der Lidar-Sensor (4) zum Empfangen von Sensordaten (SD) ausgebildet ist, die Objektdaten (OD) enthalten.

9. Kraftfahrzeug mit einer Vorrichtung (10) nach einem der Ansprüche 5 bis 7.
